# DEMANDE DE BREVET EUROPEEN

(11) **EP 1 744 274 A2**
(43) Date de publication de la demande: **17.01.2007**
(21) Numéro de dépôt: 06116579.1
(22) Date de dépôt: 04.07.2006
(51) Int. Cl.: G06Q 10/00, H04L 12/58

(54) **Procédé de gestion de conversation privilégiée dans un système de conversations instantanées**

(30) Priorité: 12.07.2005 FR 0507445
(71) Demandeur: FRANCE TELECOM, 75015 Paris (FR)
(72) Inventeur: Dauguet, Anthony, 14260, SAINT PIERRE DU FRESNE (FR); Briand, Olivier, 14000, CAEN (FR); Ferron, Sophie, 35000, RENNES (FR)
(74) Mandataire: Desormiere, Pierre-Louis

(57) **Abrégé**

L'invention concerne un procédé de gestion de conversation privilégiée dans un service de conversation électronique instantanée comprenant une pluralité de clients (C_1, C_2, C_3, C_S) en liaison avec un serveur de messagerie (200), chaque client (C_1 ; C_2 ; C_3; C_S) ayant au moins un état de présence visible par les autres clients, ledit état de présence variant au moins entre un état disponible et un état occupé ou déconnecté. Le procédé comprend une étape d'envoi, par un premier client (C_S), d'une demande de conversation privilégiée avec au moins un deuxième client (C_3) et, en réponse à cette demande, une étape de changement d'état de présence dudit premier client en un état occupé ou déconnecté pour tous les clients (C_1, C_2) autres que ledit deuxième client (C_3).

## Description

### Domaine de l'invention

La présente invention concerne le domaine des systèmes de conversation électronique instantanée tels que les messageries instantanées ou les services de "chat" (services de discussion en temps réel). Elle concerne plus particulièrement la gestion des conversations dans de tels systèmes.

### Art antérieur

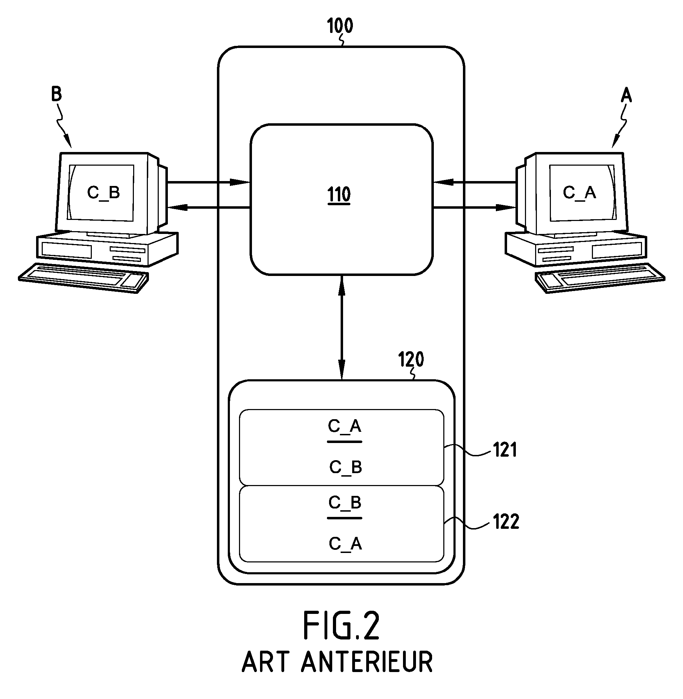

Les systèmes de conversation électronique en temps réel, tels que la messagerie instantanée, permettent à des utilisateurs d'échanger des messages en temps réel. La figure 2 illustre un exemple simplifié d'un système de messagerie instantanée standard qui comprend un serveur de messagerie instantanée 100 auquel sont connectés deux utilisateurs A et B par leur client respectif de messagerie instantanée C_A et C_B. Le serveur 100 comprend un module principal de messagerie instantanée 110 pour la gestion de la présence et l'échange de messages entre clients de messagerie instantanée en fonction de règles de routage des messages instantanés. Ce module gère également l'ensemble des listes de contacts 120 (également appelées "buddy lists") de chaque client de la messagerie instantanée telles que les listes 121 et 122 correspondant respectivement aux listes de contacts de A et B.

L'état de présence/disponibilité d'un utilisateur est un paramètre dynamique visible pour les autres usagers. Cet état peut varier en général entre un état "présent" et "absent" ou un état "disponible" et "occupé". Ces états de présence définissent pour l'ensemble de la liste de contacts de l'utilisateur la capacité à dialoguer de ce dernier, C'est l'utilisateur lui-même qui décide de son état de présence, Il lui est toutefois possible, dans certains cas, de programmer un changement d'état de présence en fonction du temps, comme par exemple un état de présence "absent" après un certain temps d'inactivité.

Sur la figure 2, lorsque l'utilisateur B cherche à dialoguer avec l'utilisateur A à travers des messages instantanés, B consulte d'abord l'état de présence de A indiqué dans sa liste de contact 122. Si ce dernier a paramétré son état de présence sur "disponible" par exemple, l'utilisateur B sait qu'il peut lui envoyer un message immédiatement et entamer un dialogue avec lui. Si, au contraire, l'état de présence de A indiqué dans la liste de contact de B correspond à "absent" ou "occupé", B sait que A est momentanément indisponible et qu'il ne lui répondra pas dans l'immédiat.

Actuellement, un utilisateur de messagerie instantanée peut être totalement ou partiellement "occupé". Dans le dernier cas, l'utilisateur peut être par exemple "occupé" pour 90 % de sa liste de contacts et "disponible" pour les 10 % restants. Cela correspond à la notion de gestion de présence et de disponibilité différenciée qui permet à l'utilisateur de choisir pour une période donnée le ou les contacts de sa liste avec lesquels il souhaite dialoguer.

Cependant, en cours de conversation sur la messagerie instantanée, l'utilisateur ne peut pas de manière simple, rapide et efficace se déclarer disponible uniquement pour un ou plusieurs contacts qu'il souhaite privilégier à ce moment dans la conversation sur messagerie instantanée. En effet, pour avoir une conversation privilégiée (i.e. échanger des messages instantanés) avec seulement un ou plusieurs contacts déterminés, il doit, d'une part, prévenir tous les autres contacts avec lesquels il est déjà en conversation (sauf ceux qu'il souhaite privilégier) qu'il va être momentanément indisponible, puis, d'autre part, se déclarer indisponible pour tout le reste de sa liste de contacts ("buddy lists") (sauf ceux qu'il souhaite privilégier), et ce en changeant manuellement à chaque fois son état de présence.

Cette absence de moyen simple et rapide de limitation du nombre d'interlocuteurs dans des conversations simultanées représente un inconvénient Important en raison de l'usage grandissant des messageries instantanées notamment dans les entreprises où le nombre de sollicitations simultanées peut être rapidement élevé. En effet, sans un tel moyen et à partir d'un certain nombre de conversations simultanées, par exemple trois, il sera difficile pour l'utilisateur de suivre toutes les conversations et de répondre à tout le monde dans des délais rapides, ce qui est pourtant le principe même des systèmes de conversation électronique instantanée.

### Objet et description succincte de l'invention

La présente invention vise à remédier aux inconvénients précités et à proposer une solution technique qui permet à un utilisateur d'un système de conversation électronique instantanée de prioriser ou privilégier, de façon simple et efficace, une conversation instantanée avec un ou plusieurs contacts de son choix, et ce sans se soucier momentanément des autres sollicitations réelles ou potentielles pouvant intervenir.

Ces buts sont atteints grâce à un procédé de gestion de conversation privilégiée dans un service de conversation électronique instantanée comprenant une pluralité de clients en liaison avec un serveur de messagerie, chaque client ayant au moins un état de présence visible par les autres clients qui varie au moins entre un état disponible et un état occupé ou déconnecté. Le procédé comprend une étape d'envoi, par un premier client, d'une demande de conversation privilégiée avec au moins un deuxième client et, en réponse à cette demande, une étape de changement d'état de présence dudit premier client en un état occupé ou déconnecté pour tous les clients autres que ledit deuxième client.

Ainsi, le procédé de la présente invention permet à un utilisateur d'un service de conversation électronique instantanée (ex. messagerie instantanée ou "chat") de décider à tout moment d'une conversation instantanée avec quel(s) utilisateur(s) il souhaite avoir une conversation privilégiée. La gestion de présence de l'utilisateur est, par conséquent, réalisée automatiquement en fonction de sa demande de conversation privilégiée et du ou des client(s) indiqué(s) dans sa demande, Pour tous les autres utilisateurs non privilégiés dans la conversation, l'utilisateur présente alors un état de présence de type "occupé" ou "déconnecté".

Pour les clients qui sont déjà en conversation avec le premier client lorsque ce dernier demande une conversation privilégiée avec un deuxième client, ces derniers peuvent être informés de l'indisponibilité momentanée du premier client par envoi d'un message d'indisponibilité. Ce message d'indisponibilité peut être configuré (personnalisé) à l'avance par l'utilisateur puis stocké sur le serveur de messagerie.

Les messages instantanés envoyés par les clients autres que celui ou ceux privilégiés dans la conversation sont traités comme des messages envoyés à un utilisateur déconnecté ("*Offline*") hors ligne. Ces messages peuvent être momentanément stockés sur le serveur de messagerie le temps de la conversation privilégiée puis renvoyés à la fin de celle-ci ou bien rediriger vers le client sous forme de messages électroniques standards (e-mail).

Le procédé de l'invention peut être mis en oeuvre par un programme d'ordinateur sur un serveur de conversation électronique instantanée, le programme comprenant des instructions pour exécuter les étapes du procédé décrit ci-dessus.

Ce programme peut être mis à disposition par téléchargement. L'invention concerne, par conséquent, un procédé d'utilisation du programme décrit ci-dessus qui comporte une étape de mise à disposition dudit programme par téléchargement.

La présente invention concerne également un serveur de conversation électronique instantanée comprenant un module principal de messagerie pour gérer l'échange des messages instantanés entre des clients, chaque client ayant au moins un état de présence visible par les autres clients qui varie au moins entre un état disponible et un état occupé ou déconnecté. Le serveur comprend en outre un module de gestion de conversation privilégiée pour, en réponse à une demande de conversation privilégiée d'un premier client avec au moins un deuxième client, changer l'état de présence dudit premier cirent en un état occupé ou déconnecté pour tous les clients autres que ledit deuxième client.

La solution technique proposée par l'invention pour réaliser une gestion de conversation privilégiée pour un client d'un système de conversation électronique instantanée dans un serveur de messagerie ne nécessite aucune modification du module principal de messagerie. Cette solution peut être, par conséquent, facilement intégrée dans des serveurs de conversation électronique instantanée déjà en place.

Le serveur comprend en outre des moyens pour stocker et envoyer un message d'indisponibilité aux dents déjà en conversation avec le premier client à l'exception du deuxième client.

Le serveur peut comprendre des moyens pour stocker les messages instantanés envoyés par les clients de la liste de contacts du premier client autres que le deuxième client ou pour rédiriger lesdits messages par courrier électronique.

L'invention concerne également un module de gestion de conversation privilégiée dans un service de conversation électronique instantanée entre une pluralité de clients, chaque client ayant au moins un état de présence visible par les autres clients, ledit état de présence variant au moins entre un état disponible et un état occupé ou déconnecté, ledit module comprenant des moyens pour, en réponse à une demande de conversation privilégiée d'un premier client avec au moins un deuxième client, changer l'état de présence dudit premier client en un état occupé ou déconnecté pour tous les clients autres que ledit deuxième client

Le module comprend en outre des moyens pour envoyer un message d'indisponibilité aux clients déjà en conversation avec le premier client autres que le deuxième client et pour stocker ledit message d'indisponibilité.

L'invention concerne encore un système de conversation électronique instantanée comprenant une pluralité de clients en liaison avec au moins un serveur de conversation électronique instantanée tel que décrit précédemment.

Afin de permettre à l'utilisateur de demander une conversation privilégiée avec un ou plusieurs utilisateurs de sa liste de contacts, les clients comprennent des moyens d'interface pour envoyer une demande de conversation privilégiée au module de gestion de conversation privilégiée du serveur de conversation électronique instantanée,

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue schématique globale d'un mode de réalisation du système de messagerie instantanée selon l'invention,
- la figure 2 est une vue schématique d'un système de messagerie instantanée selon l'art antérieur.

### Description détaillée des modes de réalisation de l'invention

La présente invention s'applique aux systèmes de conversation électronique instantanée tels que les systèmes de messagerie instantanée ou services de "chat". L'invention propose d'intégrer des fonctionnalités essentiellement sous forme logicielle dans les serveurs de messagerie habituellement utilisés pour réaliser des échanges de messages instantanés entre des utilisateurs. Les fonctionnalités proposées sont compatibles avec les normes et protocoles actuellement utilisés par les services de conversation instantanée, ce qui permet d'intégrer ces nouvelles fonctionnalités aussi bien dans des nouveaux serveurs que dans des serveurs de conversation instantanée déjà en place. Ces fonctionnalités sous forme logicielle peuvent être disponibles à distance comme, par exemple, à partir d'un serveur spécifique. Dans ce cas, les fonctionnalités sont mises à disposition sous forme d'un programme informatique qui peut être téléchargé sur les serveurs de messagerie.

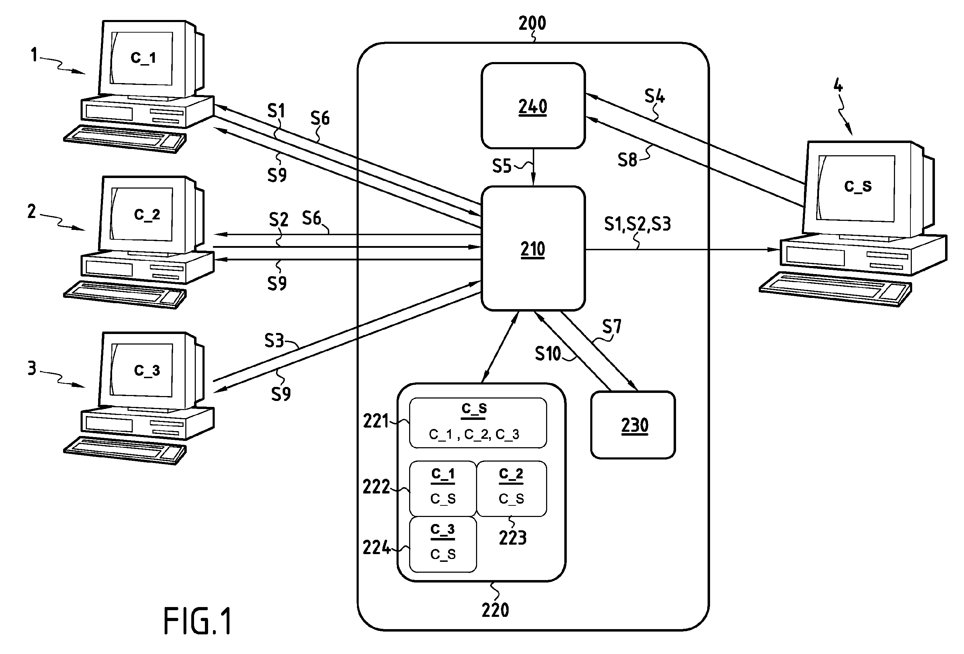

La figure 1 est un schéma fonctionnel général d'un système selon l'invention montrant les différentes parties intervenant dans le procédé de l'invention. Le système de l'invention décrit ici est mis en oeuvre dans un système de messagerie instantanée. Les parties qui interviennent principalement lors d'une opération de limitation du nombre des conversations simultanées sont un ou plusieurs utilisateurs sollicitants (ici trois utilisateurs 1 à 3) qui possèdent chacun un terminal comprenant un client de messagerie instantanée (C_1, C_2, C_3), un utilisateur sallieité 4 qui possède un terminal équipé d'un client de messagerie instantanée C_S, ainsi qu'un serveur de messagerie instantanée 200. De façon connue, le client de messagerie instantanée (ou agent utilisateur) est un logiciel qui permet à un utilisateur d'accéder, par un identifiant propre, à un service de messagerie instantanée via un serveur. Le client de messagerie instantanée permet notamment de composer et de recevoir des messages. Il permet aussi à l'utilisateur d'accéder au serveur de messagerie instantanée pour gérer sa liste de contacts associée.

Par souci de simplification, le système de la figure 1 est représenté avec trois clients de messagerie instantanée sollicitants et un client de messagerie instantanée sollicité. Toutefois, au vu de la description qui suit, l'homme du métier envisagera sans difficulté la mise en oeuvre d'un tel système à plus grande échelle, c'est-à-dire avec un nombre d'utilisateurs sollicitants et sollicités différent et en particulier plus important.

Dans l'exemple considéré dans la figure 1, les utilisateurs 1 à 4 disposent, en tant que terminal d'envoi et de réception des messages, d'un terminal fixe, du type ordinateur personnel connecté à un réseau informatique. Cependant, la présente invention s'applique d'une manière générale à tous les terminaux qui comprennent des moyens d'envoi et de réception de messages instantanés via un réseau de communication (ex. téléphone mobile ou assistant numérique personnel communiquant).

Le réseau de communication (non représenté) à travers lequel les terminaux des utilisateurs sont connectés au serveur de messagerie instantanée peut être un réseau "ouvert" comme le réseau Internet, un réseau "fermé" tel qu'un réseau d'entreprise de type Intranet, ou encore un réseau partiellement ouvert utilisant à la fois un réseau fermé et un réseau ouvert.

Le serveur de messagerie instantanée 200 permet l'échange de messages instantanés entre deux utilisateurs ou plus qui sont vus par le serveur comme unique grâce à leur identifiant. Le serveur de messagerie instantanée 200 comprend un module principal de messagerie instantanée 210, un module de listes de contacts 220, un module de traitement de messages 230 et un module de gestion de conversation privilégiée 240.

Le module principal de messagerie instantanée 210, qui est un élément logiciel d'un serveur de messagerie instantanée bien connu en soi, est destiné à réaliser la gestion de présence et l'échange de messages entre les clients de messagerie instantanée en fonction de règles de routage de messages instantanés (agent de transfert). Il gère également les listes de contacts.

Le module 220 est une base d'informations qui fait partie intégrante du serveur de messagerie instantanée et qui contient toutes les listes de contacts de chaque client de messagerie, dans l'exemple considéré ici les listes de contacts des clients C_S 221, C_1 222, C_2 223 et C_3 224.

Le module de traitement de messages 230 reçoit les messages instantanés qui n'ont pas pu être acheminés directement à leur destinataire. Plus précisément, les messages instantanés en provenance de clients de messagerie instantanée sont reçus par ce module lorsque les utilisateurs de la messagerie instantanée envoient des messages à des contacts présentant un état de présence/disponibilité "*Déconnecté*" (ou "*Offline*") ou "*Occupé*" (ou "*Busy*"). Les messages reçus par la module 230 peuvent être stockés jusqu'à ce l'état de présence/disponibilité du destinataire des messages passe à "*Disponible*" (ou "*Available*"), les messages stockés lui étant alors envoyés. Le module 230 peut également rediriger les messages qu'il reçoit via une messagerie de courrier électronique standard (i.e. e-mail).

Le module de gestion de conversation privilégiée 240 est un élément propre à la présente invention. Il reçoit directement des requêtes de clients de messagerie instantanée pour activer le processus permettant de privilégier une conversation par rapport à une ou plusieurs autres. Ce module s'interface avec le module principal de messagerie instantanée 210 pour envoyer des informations de présence et des messages d'information qui seront transmis à des clients de messagerie instantanée. Il est alors vu comme un client de messagerie instantanée par le module principal de messagerie instantanée 210.

Le module de gestion de conversation privilégiée 240 est par défaut inactif et n'intervient pas dans l'échange des messages instantanés ni dans la gestion de présence différenciée. Au moment où un utilisateur, via son client de messagerie instantanée, par exemple l'utilisateur 4 du client de messagerie instantanée C_S, choisit de privilégier une conversation avec, par exemple, l'utilisateur 3 du client de messagerie instantanée C_3, le client de messagerie instantanée C_S envoie au module de gestion de conversation privilégiée 240 un message lui signifiant que C_S souhaite avoir une conversation privilégiée avec C_3 alors qu'il est à ce moment en conversation avec C_1, C_2 et C_3. Le module de gestion de conversation privilégiée 240 s'active alors pour le dient C_S et envoie aux clients C_1 et C_2 un message d'information personnalisé dans leur fenêtre d'affichage des messages instantanés leur indiquant que C_S va être momentanément indisponible (message d'indisponibilité comme par exemple *"Veuillez m'excuser, je suis obligé d'interrompre notre conversation momentanément*").

Ensuite, pour l'ensemble des clients de messagerie instantanée autre que C_3, l'état de présence de l'utilisateur 4 devient "*Occupé*" ("*Busy*") et les nouveaux messages adressés au client de messagerie instantanée C_S de l'utilisateur 4 par les utilisateurs autres que l'utilisateur 3 sont gérés comme pour l'état *"Déconnecté*" ("*Offline*"), c'est-à-dire qu'ils sont reçus par le module de traitement de messages 230 qui peut soit les stocker momentanément dans l'attente d'un changement de l'état de présence de l'utilisateur 4, soit les rediriger par messagerie électronique standard en utilisant l'adresse de courrier électronique (e-mail) de l'utilisateur 4.

Lorsque la conversation entre le client de messagerie instantanée C_S et C_3 s'arrête, le client de messagerie instantanée C_S envoie un message au module de gestion de conversation privilégiée 240 pour lui indiquer la fin de la conversation privilégiée.

L'état de présence/disponibilité du client de messagerie C_S passe de *"Occupé*" ("*Busy*") à "*Disponible*" ("*Available*"). Si des messages envoyés par les clients de messagerie autres que C_3 ont été stockés par le module de traitement de messages 230, ces derniers sont transmis à l'utilisateur 4, Le module de gestion de conversation privilégiée 240 devient inactif jusqu'à ce qu'il reçoive de nouveau une demande de conversation privilégiée d'un client de messagerie instantanée,

Le module de gestion de conversation privilégiée 240 s'interface avec le module principal de messagerie instantanée 210 qui fait partie du serveur de messagerie instantanée 200. Le module de gestion de conversation privilégiée 240 envoie automatiquement, via le module principal de messagerie instantanée 210, un message d'information indiquant l'indisponibilité de l'utilisateur à tous les clients de messagerie instantanée qu'il n'a pas privilégiés dans la conversation. Cette configuration (i.e. texte du message) peut être établie entre le client de messagerie sollicité, ici C_S, et le module de gestion de conversation privilégiée 240 qui la stocke pour chaque utilisateur de la messagerie instantanée.

La configuration du message d'indisponibilité ainsi que le lancement du processus de conversation privilégiée peuvent être réalisés par l'utilisateur à partir de son client de messagerie instantanée. A cet effet, l'utilisateur, par exemple l'utilisateur 4 du client de messagerie instantanée C_S, réalise la configuration en sélectionnant par exemple une option "texte du message d'indisponibilité" qui lui permet d'accéder à une fenêtre de saisie de texte pour rédiger son message d'indisponibilité qui est destiné à être envoyé automatiquement par le module de gestion de conversation privilégiée 240 comme expliqué précédemment. Une fois rédigé, le message d'indisponibilité est envoyé au module 240 qui le stocke.

De même, pour le lancement du processus de conversation privilégiée, l'utilisateur sélectionne par exemple une option "demander une conversation privilégiée" disponible dans le menu de son client de messagerie instantanée. Cette sélection déclenche l'ouverture d'une fenêtre qui l'invite à indiquer les clients de messagerie instantanée avec lesquels il souhaite poursuivre la conversation. Une fois les clients de messagerie instantanée sélectionnés pour la conversation privilégiée, le client de messagerie instantanée envoie un message contenant les clients sélectionnés au module de gestion de conversation privilégiée 240. Le module 240 utilise ce message pour déterminer quels sont les clients de messagerie instantanée pour lesquels l'utilisateur est momentanément indisponible et qui doivent recevoir le message d'indisponibilité.

Le module de gestion de conversation privilégiée 240 peut être développé dans un langage tel que le C++ ou Java. Ainsi, il peut être intégré dans l'architecture d'un serveur de messagerie instantanée (ex, Jabber) et utilise dans ce cas le protocole standardisé "XMPP" ("eXtensible Messaging and Presence Protocol"; Protocole de messagerie instantanée basé sur XML). Dans le cas où le module de gestion de conversation privilégiée selon l'invention est intégré dans un serveur de messagerie instantanée déjà existant ou non, ce dernier doit utiliser un protocole compatible avec celui employé par le module principal de ce serveur de messagerie instantanée.

On décrit maintenant un mode de mise en oeuvre du procédé selon l'invention dans le système de la figure 1 sur laquelle les différentes étapes intervenant lors d'une opération de gestion de conversation privilégiée du nombre de conversations simultanées sont représentées par des flèches S1 à S9.

La mise en oeuvre qui va être décrite se déroule selon les hypothèses suivantes :
- les utilisateurs 1 à 3 respectivement des clients de messagerie instantanée sollicitants C_1 à C_3 font partie de la liste de contacts 221 de l'utilisateur 4 du client de messagerie instantanée sollicité C_S qui lui même fait partie des listes de contacts 222 à 224 respectivement des clients de messagerie instantanée C_1 à C_3,
- les clients de messagerie instantanée C_1 à C_3 sollicitent le client de messagerie instantanée C_S dans le même laps de temps, c'est-à-dire que l'utilisateur 4 va devoir gérer trois conversations simultanées.

Dans une première étape S1, le client de messagerie instantanée C_1 souhaite dialoguer par messagerie instantanée avec le client de messagerie instantanée C_S. La première conversation de C_S débute. Le client de messagerie instantanée C_2 souhaite aussi dialoguer par messagerie instantanée avec le client de messagerie instantanée C_S. C'est la deuxième conversation simultanée pour C_S (étape S2).

Le troisième client de messagerie instantanée C_3 souhaite aussi dialoguer avec le client de messagerie instantanée C_S. C'est la troisième conversation simultanée pour C_S (étape S3).

A chacune de ces étapes, les messages instantanés adressés par les clients de messagerie instantanée C_1, C_2 et C_3 à C_S transite par le serveur de messagerie instantanée 210.

A ce moment, l'utilisateur 4 souhaite converser de façon privilégiée avec l'utilisateur 3. A cet effet, il utilise son client de messagerie instantanée C_S pour envoyer au module de gestion de conversation privilégiée 240 un message lui indiquant qu'il souhaite entrer en conversation privilégiée avec le client de messagerie instantanée C_3 (étape S4). Le client de messagerie instantanée C_S est alors en conversation avec les trois clients de messagerie instantanée C_1 à C_3.

Le module 240 s'active alors et envoie un message d'indisponibilité de la part de l'utilisateur 4 aux clients de messagerie instantanée C_1 et C_2 pour les informer qu'il n'est plus disponible pour les conversations en cours. Ce message peut être configuré par avance et stocké sur le module 240 comme décrit précédemment. Le module 240 envoie des informations sur l'état de présence du client C_S au module principal de messagerie instantanée 210 pour que le client de messagerie instantanée C_S devienne "*Déconnecté*" ("*Offline*") ou "*Occupé*" ("*Busy*") pour tous les clients de messagerie instantanée de sa liste de contacts 221 à l'exception du client de messagerie instantanée C_3. Pour envoyer ces informations (message d'indisponibilité et état de présence), le module 240 s'adresse au module principal de messagerie instantanée 210 en tant que client de messagerie instantanée (étape S5).

Ainsi, les clients de messagerie instantanée C_1 et C_2 reçoivent le message d'indisponibilité dans leur fenêtre d'affichage des messages instantanés leur indiquant que C_S va être momentanément indisponible (étape S6).

L'ensemble des clients de messagerie instantanée à l'exception du client C_3 voit le client C_S avec un état de présence "*Déconnecté"* ("*Offline*") ou "*Occupé*" ("*Busy*") et les nouveaux messages adressés au client C_S autres que ceux provenant de C_3 sont gérés comme pour l'état de présence "*Déconnecté*" ("*Offline*"), c'est-à-dire sont traités par le module de traitement de messages 230 comme décrit précédemment (étape 57). Par ailleurs, le client C_3 voit le client C_S ainsi que les clients C_1 et C_2 dans l'état de présence "*Disponible*" ("*Available*").

Lorsque la conversation privilégiée entre les clients C_S et C_3 se termine, le client de messagerie instantanée C_S envoie automatiquement au module de gestion de conversation privilégiée 240 un message lui signifiant la fin de la conversation privilégiée (étape S8). L'état de présence du client de messagerie instantané C_5 passe de "*Occupé*" ("*Busy*") à "*Disponible*" ("*Available*") pour tous les membres de sa liste de contacts 221 (C_1 à C_3) (étape S9). Le module 240 devient inactif jusqu'à ce qu'une nouvelle conversation privilégiée soit demandée.

Si des messages instantanés ont été stockés par le module de traitement de messages 230 durant la conversation privilégiée, ils sont envoyés au client de messageries instantanée C_S (étape S10).

De façon optionnelle, certains clients de messagerie instantanée peuvent être reconnus comme des clients prioritaires pour lesquels les règles de conversation privilégiée ne s'appliquent pas. L'utilisateur peut par exemple paramétrer de tels clients dans sa liste de contacts de manière à être toujours disponible pour ces clients même s'il a demandé une conversation privilégiée.

## Revendications

1. Procédé de gestion de conversation privilégiée dans un service de conversation électronique instantanée comprenant une pluralité de clients (C_1, C_2, C_3, C_S) en liaison avec un serveur de messagerie (200), chaque client (C_1 ; C_2 ; C_3 ; C_S) ayant au moins un état de présence visible par les autres clients, ledit état de présence variant au moins entre un état disponible et un état occupé ou déconnecté, ledit procédé comprenant une étape d'envoi par un premier client (C_S), d'une demande de conversation privilégiée avec au moins un deuxième client (C_3) et, en réponse à cette demande, une étape de changement d'état de présence dudit premier client en un état occupé ou déconnecté pour tous les clients (C_1, C_2) autres que ledit deuxième client (C_3).

2. Procédé selon la revendication 1, **caractérisé en ce qu'**il comprend en outre une étape d'envoi d'un message d'indisponibilité, ledit message étant envoyé aux clients (C_1, C_2) déjà en conversation avec le premier client (C_S) autres que le deuxième client (C_3).

3. Procédé selon la revendication 2, **caractérisé en ce qu'**il comprend une étape préalable de configuration du message d'indisponibilité par le premier client (C_S), ledit message étant stocké sur le serveur de messagerie (200).

4. Procédé selon l'une quelconque des revendications 1 à 3, **caractérisé en ce qu'**il comprend une étape de stockage des messages envoyés audit premier client (C_S) par les clients (C_1, C_2) autres que le deuxième client (C_3) ou une étape de renvoi desdits messages par courrier électronique.

5. Serveur de conversation électronique instantanée (200) **caractérisé en ce qu'**il comprend un module principal de messagerie (210) pour gérer l'échange des messages entre des clients (C_1, C_2, C_3, C_S), chaque client (C_1; C_2; C_3; C_S) ayant au moins un état de présence visible par les autres clients, ledit état de présence variant au moins entre un état disponible et un état occupé ou déconnecté, ledit serveur comprenant en outre un module de gestion de conversation privilégiée (240) pour, en réponse à une demande de conversation privilégiée d'un premier client (C_S) avec au moins un deuxième cirent (C_3), changer l'état de présence dudit premier client en un état occupé ou déconnecté pour tous les clients (C_1, C_2) autres que ledit deuxième client (C_3).

6. Serveur selon la revendication 5, **caractérisé en ce qu'**il comprend en outre des moyens pour envoyer un message d'indisponibilité aux clients (C_1, C_2) déjà en conversation avec le premier client (C_S) autres que le deuxième client (C_3).

7. Serveur selon la revendication 6, **caractérisé en ce qu'**il comprend des moyens pour stocker ledit message d'indisponibilité.

8. Serveur selon l'une quelconque des revendications 5 à 7, **caractérisé en ce qu'**il comprend des moyens pour stocker les messages instantanés envoyés audit premier client (C_S) par les clients (C_1, C_2) autres que le deuxième client (C_3) ou pour rediriger lesdits messages par courrier électronique.

9. Module de gestion de conversation privilégiée dans un service de conversation électronique instantanée entre une pluralité de clients (C_1, C_2, C_3, C_S), chaque client (C_1 ; C_2 ; C_3 ; C_S) ayant au moins un état de présence visible par les autres clients, ledit état de présence variant au moins entre un état disponible et un état occupé ou déconnecté, ledit module comprenant des moyens pour, en réponse à une demande de conversation privilégiée d'un premier client (C_S) avec au moins un deuxième client (C_3), changer l'état de présence dudit premier client en un état occupé ou déconnecté pour tous les clients (C_1, C_2) autres que ledit deuxième client (C_3).

10. Module selon la revendication 9, **caractérisé en ce qu'**if comprend en outre des moyens pour envoyer un message d'indisponibilité aux clients (C_1, C_2) déjà en conversation avec le premier client (C_S) autres que le deuxième client (C_3).

11. Module selon la revendication 10, **caractérisé en ce qu'**il comprend des moyens pour stocker ledit message d'indisponibilité.

12. Système de service de conversation électronique instantanée **caractérisé en ce qu'**il comprend une pluralité de clients (C_1, C_2, C_3, C_S) en liaison avec au moins un serveur de conversation électronique instantanée (200) comprenant un module principal de messagerie (210) pour gérer l'échange des messages entre des clients (C_1, C_2, C_3, C_S), chaque client (C_1 ; C_2 ; C_3 ; C_S) ayant au moins un état de présence visible par les autres clients, ledit état de présence variant au moins entre un état disponible et un état occupé ou déconnecté, ledit serveur comprenant en outre un module de gestion de conversation privilégiée (240) pour, en réponse à une demande de conversation privilégiée d'un premier client (C_S) avec au moins un deuxième client (C_3), changer l'état de présence dudit premier client en un état occupé ou déconnecté pour tous les clients (C_1, C_2) autres que ledit deuxième client (C_3).

13. Système selon la revendication 12, **caractérisé en ce que** les clients (C_1, C_2, C_3, C_S) comprennent des moyens d'interface pour envoyer une demande de conversation privilégiée au module de gestion de conversation privilégiée (240) du serveur de conversation électronique (200).

14. Programme d'ordinateur **caractérisé en ce qu'**il est destiné à être mis en oeuvre sur un serveur de conversation électronique instantanée (200) pour gérer l'échange des messages entre des clients (C_1, C_2, C_3, C_S), chaque client (C_1; C_2; C_3; C_S) ayant au moins un état de présence visible par les autres clients, ledit état de présence variant au moins entre un état disponible et un état occupé ou déconnecté, ledit programme comprenant des instructions pour, en réponse à une demande de conversation privilégiée d'un premier client (C_S) avec au moins un deuxième client (C_3), changer l'état de présence dudit premier client en un état occupé ou déconnecté pour tous les clients (C_1, C_2) autres que ledit deuxième client (C_3).

15. Procédé d'utilisation d'un programme d'ordinateur selon la revendication 14 comprenant une étape de mise à disposition dudit programme par téléchargement.
